# EUROPÄISCHE PATENTSCHRIFT

(11) **EP 1 851 597 B1**
(45) Veröffentlichungstag und Bekanntmachung des Hinweises auf die Patenterteilung: **28.08.2013**
(21) Anmeldenummer: 06704586.4
(22) Anmeldetag: 06.01.2006
(51) Int. Cl.: G05B 19/042, G05B 19/418

(54) **AUTOMATISIERUNGSSYSTEM**
AUTOMATION SYSTEM
SYSTEME D'AUTOMATISATION

(30) Priorität: 17.01.2005 DE 102005002743
(43) Veröffentlichungstag der Anmeldung: 07.11.2007
(73) Patentinhaber: Siemens Aktiengesellschaft, 80333 München (DE)
(72) Erfinder: KRAMER, Dieter, 01279 Dresden (DE); LANG, Gerhard, 14557 Wilhelmshorst (DE); NEUMANN, Götz, 13627 Berlin (DE)
(86) Internationale Anmeldenummer: PCT/EP2006/050063
(87) Internationale Veröffentlichungsnummer: WO 2006/074981

(56) Entgegenhaltungen:
- WO-A-98/14853
- DE-A1- 10 260 806
- US-A- 4 901 218
- US-A1- 2002 103 946
- US-A1- 2002 183 863
- US-A1- 2003 023 795
- US-B1- 6 560 235

## Beschreibung

Die Erfindung betrifft ein Automatisierungssystem mit mindestens einer an einen automatisierten Prozess angeschlossenen Messwerterfassungseinrichtung und zumindest einem mit der mindestens einen Messwerterfassungseinrichtung in Verbindung stehenden Feldgerät und einem mit dem zumindest einen Feldgerät in Verbindung stehenden Leitrechner.

Ein solches Automatisierungssystem ist beispielsweise aus dem Informationsblatt "SICAM HV - Digitale Leistungsschaltersteuerung (Digital Breaker Control DBC)", Bestellnr. E5001-U113-A230/1 der Siemens AG bekannt. Das Informationsblatt zeigt nämlich ein Automatisierungssystem mit mehreren Busebenen für einen automatisierten Prozess, in diesem Fall um ein Energieversorgungsnetz. Über einen sogenannten Prozessbus sind Wandler als Messwerterfassungseinrichtungen und Schaltersteuerungen mit Feldgeräten in Form von Prozessleitgeräten und Schutzgeräten verbunden. Die Feldgeräte wiederum sind über einen sogenannten Feldbus mit einer Nahsteuerung als Leitrechner verbunden. Über den Prozessbus werden üblicherweise neben Steuerbefehlen für die Schaltersteuerungen die von den Wandlern erfassten Messdaten, wie Strom- und Spannungsmesswerte, an die Feldgeräte übermittelt. Die Feldgeräte können zudem von dem Leitrechner über den Feldbus Steuerbefehle erhalten und in umgekehrter Richtung Informationen über den automatisierten Prozess an die Nahsteuerung beispielsweise zur Informationsdarstellung auf einem Anzeigesystem in einer Leitwarte weitergeben.

Der Erfindung liegt die Aufgabe zugrunde, ein gattungsgemäßes Automatisierungssystem hinsichtlich seines Aufbaus noch weiter zu vereinfachen.

Diese Aufgabe wird erfindungsgemäß durch ein Automatisierungssystem der oben angegebenen Art gelöst, bei dem die mindestens eine Messwerterfassungseinrichtung, das zumindest eine Feldgerät und der Leitrechner mit einem gemeinsamen Datenübertragungsnetzwerk verbunden sind, das zur Übertragung von digitalen Messdaten von der mindestens einen Messwerterfassungseinrichtung an das zumindest eine Feldgerät nach einem ersten Kommunikationsprotokoll und zur Übertragung von digitalen Steuerdaten zwischen dem zumindest einen Feldgerät und dem Leitrechner nach einem zweiten Kommunikationsprotokoll eingerichtet ist. Das erfindungsgemäße Automatisierungssystem weist anstelle zweier voneinander unabhängiger Bussysteme nur noch ein Datenübertragungsnetzwerk auf, mit dem alle Komponenten des Automatisierungssystems in Verbindung stehen. Um sowohl digitale Messdaten als auch digitale Steuerdaten über das Datenübertragungsnetzwerk übertragen zu können, ist dieses zur Übertragung der jeweiligen Daten nach unterschiedlichen Kommunikationsprotokollen geeignet. Dadurch, dass nur noch ein Netzwerk besteht, an das alle Komponenten des Automatisierungssystems angeschlossen sind, wird der Aufbau des Automatisierungssystems weiter vereinfacht.

Aus der Dokument US 4,901,281 wird ein Automatisierungssystem offenbart, in dem sämtliche Kommunikationsbeteiligte an dem Datenübertragungsnetzwerk über Kommunikationsadapter mit dem Datenübertragungsnetzwerk in Verbindung stehen, so dass das Datenübertragungsnetzwerk lediglich zur Übertragung eines einzigen Kommunikationsprotokolls eingerichtet ist.

Gemäß einer vorteilhaften Ausführungsform des erfindungsgemäßen Automatisierungssystems ist das Datenübertragungsnetzwerk ein Real-Time Ethernet Netzwerk. Die Verwendung eines Real-Time Ethernet Netzwerkes erlaubt es aufgrund hoher Übertragungsraten und vorhersagbarer Übertragungsdauern, Echtzeit-Applikationen in dem Automatisierungssystem durchzuführen. Außerdem kann durch das Real-Time Ethernet Netzwerk zu-dem eine Synchronisierung von an das Datenübertragungsnetzwerk übergebenen Messdaten und Steuerbefehlen stattfinden.

Außerdem sieht eine vorteilhafte Weiterbildung des erfindungsgemäßen Automatisierungssystems vor, dass mit dem Datenübertragungsnetzwerk auch Aktoreinrichtungen verbunden sind, die ausgangsseitig mit dem automatisierten Prozess in Verbindung stehen. In diesem Fall sind auch Aktoren, wie z. B. Leistungsschaltersteuerungen in das gemeinsame Datenübertragungsnetzwerk eingebunden.

Eine weitere vorteilhafte Ausführungsform des erfindungsgemäßen Automatisierungssystems sieht vor, dass das Datenübertragungsnetzwerk in Ringstruktur ausgebildet ist. Eine solche Netzwerkstruktur entspricht meist am besten dem Aufbau und den örtlichen Gegebenheiten eines Automatisierungssystems.

Gemäß einer weiteren vorteilhaften Ausführungsform des erfindungsgemäßen Automatisierungssystems ist vorgesehen, dass das Datenübertragungsnetzwerk aus zumindest zwei redundant zueinander aufgebauten Teilnetzwerken besteht. Auf diese Weise kann die Verfügbarkeit und Zuverlässigkeit der Anlage weiter gesteigert werden.

Gemäß einer vorteilhaften Ausführungsform des erfindungsgemäβen Automatisierungssystems ist ferner vorgesehen, dass die mindestens eine Messwerterfassungseinrichtung einen Analog/Digital-Umsetzer und eine Netzwerkanschlusseinrichtung zum Anschluss an das Datenübertragungsnetzwerk aufweist. Auf diese Weise können Messwerterfassungseinrichtungen besonders einfach und ohne zusätzliche Bauteile an das Datenübertragungsnetzwerk angeschlossen werden.

Um auch bereits vorhandene Messwerterfassungseinrichtungen in dem erfindungsgemäßen Automatisierungssystem betreiben zu können, ist gemäß einer alternativen Ausführungsform vorgesehen, dass die zumindest eine Messwerterfassungseinrichtung zur Umsetzung der Messdaten in das erste Kommunikationsprotokoll mit einer Umsetzungseinrichtung verbunden ist, die ausgangsseitig mit dem Datenübertragungsnetzwerk verbunden ist.

Eine weitere vorteilhafte Ausführungsform des erfindungsgemäβen Automatisierungssystems sieht schließlich vor, dass das zumindest eine Feldgerät und/oder die mindestens eine Messwerterfassungseinrichtung jeweils über eine Netzwerkanschlusseinrichtung mit dem Datenübertragungsnetzwerk verbunden ist, wobei die Netzwerkanschlusseinrichtung genau einen mit dem zumindest einen Feldgerät oder der Messwerterfassungseinrichtung verbundenen internen Port und genau zwei mit dem Datenübertragungsnetzwerk verbundene externe Ports aufweist. Solche Netzwerkanschlusseinrichtungen, wie sie beispielsweise aus der DE 102 60 806 A1 bekannt sind, gewährleisten eine einfache Anschlussmöglichkeit der Feldgeräte und/oder Messwerterfassungseinrichtung an das Datenübertragungsnetzwerk.

Zur weiteren Erläuterung der Erfindung ist in der Figur in schematischer Darstellung der Aufbau eines Automatisierungssystems gezeigt.

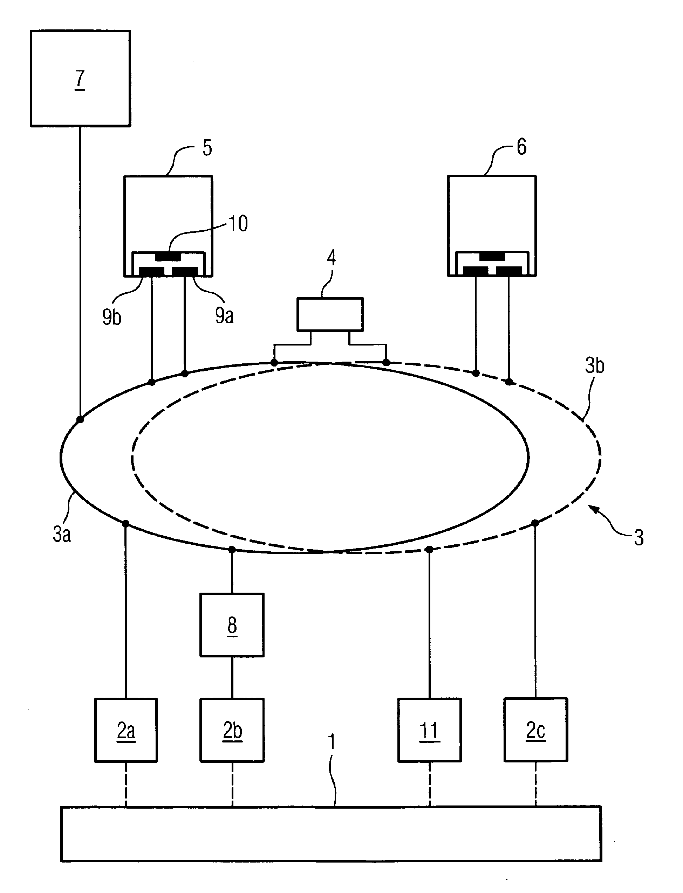

Die Figur zeigt hierbei einen nicht näher spezifizierten automatisierten Prozess 1 in höchst schematischer Darstellung. Ein solcher automatisierter Prozess 1 kann beispielsweise ein chemischer, verfahrenstechnischer oder biotechnologischer Prozess, ein industrieller Fertigungsprozess oder auch ein Prozess zur Übertragung und Verteilung von Wasser, Gas oder elektrischer Energie sein. Für die folgenden Ausführungen soll angenommen werden, dass es sich bei dem Prozess 1 um einen Prozess zur Übertragung und Verteilung elektrischer Energie, beispielsweise ein elektrisches Energieübertragungsnetz, handelt. Mit dem Prozess stehen neben Aktoreinrichtungen 11, wie z. B. Schaltersteuerungen, Messwerterfassungseinrichtungen 2a bis 2c in Verbindung. Bei diesen Messwerterfassungseinrichtungen kann es sich um Sensoren sowie konventionelle Strom- oder Spannungswandler, beispielsweise um Ringkernwandler, oder um sogenannte unkonventionelle Wandler, wie Rogowski-Spulen oder optische Wandler, handeln. Die Messwerterfassungseinrichtungen 2a bis 2c sind in ihrer Ausführung entsprechender Weise mit dem Prozess 1 verbunden; dies ist in der Figur durch eine strichliert dargestellte Linie angedeutet. Die Messwerterfassungseinrichtungen 2a bis 2c stehen außerdem mittelbar oder unmittelbar mit einem Datenübertragungsnetzwerk 3 in Verbindung, das aus zwei redundant zueinander aufgebauten Teilnetzwerken 3a und 3b besteht, von denen das Teilnetzwerk 3b in der Figur der Übersichtlichkeit halber strichliert dargestellt ist. Obwohl in diesem Ausführungsbeispiel auf zwei Teilnetzwerke Bezug genommen wird, können in der Praxis natürlich beliebig viele Teilnetzwerke vorhanden sein. Bei den Teilnetzwerken 3a, 3b handelt es sich gemäß der Figur 1 um Netzwerke in Ringstruktur; alternativ kann natürlich auch eine herkömmliche Sternstruktur verwendet werden. Die beiden Teilnetzwerke 3a und 3b sind über einen Switch 4 miteinander gekoppelt, so dass Daten von dem einen Teilnetzwerk 3a in das andere Teilnetzwerk 3b und umgekehrt übertragen werden können. Bei dem Datenübertragungsnetzwerk 3 handelt es sich vorzugsweise um ein Ethernet-Netzwerk in Form eines sogenannten Real-Time Ethernet-Netzwerkes. Eine internationale Arbeitsgruppe der IEC ist momentan mit der Normung dieses Ethernet Standards betraut.

An das Datenübertragungsnetzwerk 3 sind außerdem Feldgeräte 5 und 6 angeschlossen. Dabei kann es sich bei dem Feldgerät 5 beispielsweise um ein elektrisches Schutzgerät und bei dem Feldgerät 6 um ein Prozessleitgerät handeln. Ferner steht mit dem Datenübertragungsnetzwerk 3 ein Leitrechner 7 in Verbindung, bei dem es sich beispielsweise um einen Stationsleitrechner oder um einen zentralen Leitrechner in einer sogenannten Leitstelle handeln kann.

Im Folgenden soll die Funktionsweise des beschriebenen Automatisierungssystems erläutert werde:
Über die Messwerterfassungseinrichtungen 2a bis 2c werden den Prozess 1 beschreibende Messwerte erfasst, beispielsweise kann es sich dabei um Strom- und Spannungsmesswerte handeln. Hierbei weisen die Messwerterfassungseinrichtungen 2a und 2c bereits eine Analog-Digital-Umwandlungseinrichtung und eine Einrichtung zur Netzwerkanbindung auf. Somit können die Messwerterfassungseinrichtungen 2a und 2c direkt an das Datenübertragungsnetzwerk 3 angeschlossen werden und liefern den aufgenommenen Messwerten entsprechende digitale Messdaten gemäß einem ersten Kommunikationsprotokoll an das Datenübertragungsnetzwerk 3. Bei diesem ersten Kommunikationsprotokoll kann es sich beispielsweise um das Kommunikationsprotokoll IEC 61850-9-2 handeln, mit dem die IEC die Übertragung digitaler Abtastwerte in Systemen, die gemäß der IEC 61850 Norm ausgelegt sind, festgelegt hat.

Der Messwerterfassungseinrichtungen 2b weist hingegen keinen integrierten Analog-Digital-Umsetzer und keinen Netzwerkanschluss auf, so dass diese ihre aufgenommenen Messwerte zunächst an eine Umsetzeinrichtung 8, auch als sogenannte "Merging Unit" bezeichnet, überträgt, die anschließend eine Analog-Digital-Umwandlung und eine Umsetzung der Messwerte in digitale Messdaten gemäß dem in dem Datenübertragungsnetzwerk 3 verwendeten ersten Kommunikationsprotokoll vornimmt. Die Umsetzeinrichtung weist einen Netzwerkanschluss auf, über den sie die Messdaten direkt an das Datenübertragungsnetzwerk 3 übergeben kann.

Die digitalen Messdaten werden in dem Datenübertragungsnetzwerk 3 an die Feldgeräte 5 und 6 übertragen, mit denen Automatisierungs- und Steuerfunktionen auf Grundlage der übertragenen Messdaten durchgeführt werden. Die Feldgeräte 5 und 6 können in das Datenübertragungsnetzwerk 3 wiederum Steuerdaten einspielen, die gemäß einem zweiten Kommunikationsprotokoll, beispielsweise dem Kommunikationsprotokoll IEC 61850-8-1, übertragen werden. Mit diesem Protokoll hat die IEC für IEC-61850 konforme Systeme die Übertragung digitaler Überwachungsdaten, Steuerdaten und Leitstellendaten festgelegt, die hier zusammengefasst als Steuerdaten bezeichnet werden. Die digitalen Steuerdaten können einerseits an den Leitrechner 7 übertragen werden, der eine weitere Verarbeitung, Archivierung und Aufbereitung der Daten vornehmen kann. Außerdem können digitale Steuerdaten an die Aktoreinrichtungen, wie beispielsweise Leistungsschaltersteuerungen, übertragen werden, die wiederum auf den Prozess einwirken können. So können über das Datenübertragungsnetzwerk 3 die Feldgeräte 5 und 6 direkten Einfluss auf den Prozess 1 nehmen.

In industriellen Automatisierungssystemen wie dem hier dargestellten Automatisierungssystem spielt häufig die zeitliche Synchronisierung der einzelnen über das Datenübertragungsnetzwerk 3 übertragenen Daten eine sehr wichtige Rolle. In bisherigen Automatisierungssystemen musste hierfür zumeist ein separates Synchronisationsnetzwerk eingerichtet werden, das einen von einer zentralen Zeitgeberstelle generierten Zeittakt, beispielsweise ein Impuls pro Sekunde, an die einzelnen Komponenten des Automatisierungssystems verteilte, so dass hierüber eine genaue Zeitstempelung der gesendeten und empfangenen digitalen Daten stattfinden konnte. Der Real-Time Ethernet Netzwerkstandard benötigt ein solches separates Synchronisationsnetz nicht. Hier werden auf Seiten aller mit dem Datenübertragungsnetzwerk in Verbindung stehender Komponenten innerhalb der Netzwerkverbindung entsprechende Controller oder speziell ausgelegte integrierte Schaltungsbausteine in Form von ASICs (application specific integrated circuit), FPGAs (field programmable gate array) oder EPLDs (electrically programmable logic device) verwendet, die gemäß dem Real-Time Ethernet-Standard eine entsprechende Zeitkennzeichnung der digitalen Mess- oder Steuerdaten vornehmen können. Hierdurch vereinfacht sich der Aufbau des Automatisierungssystems entscheidend.

Die Netzwerkanbindung der Feldgeräte 5 und 6 kann beispielsweise, wie in der Figur lediglich schematisch angedeutet, eine Netzwerkanschlusseinrichtung mit genau zwei externe Ports 91, 9b aufweisen, mit denen das Feldgerät an das Datenübertragungsnetzwerk 3 angeschlossen ist. Außerdem kann die Netzwerkanschlusseinrichtung genau einen internen Port 10 aufweisen, mit dem sie dem entsprechenden Feldgerät in Verbindung steht. Die Ports 9a, 9b und 10 sind über eine entsprechende fest verdrahtete Schaltung miteinander verbunden, die beispielsweise in der deutschen Patentanmeldung DE 102 60 806 A1 beschrieben ist. Eine solche Netzwerkanschlusseinrichtung stellt gleichzeitig eine Switch-Funktionalität bereit, so dass empfangende und gesendete Daten ohne Zeitverzug zwischen den einzelnen Ports der Netzwerkanschlusseinrichtung übertragen werden können und somit kein relevanter Zeitverlust bei der Datenübertragung im Datenübertragungsnetzwerk 3 auftritt. In den Messwerterfassungseinrichtungen 2a,2b,2c und/oder den Aktoreinrichtungen 11 können entsprechende Netzwerkanschlusseinrichtungen vorhanden sein.

## Patentansprüche

1. Automatisierungssystem mit mindestens einer an einen automatisierten Prozess (1) angeschlossenen Messwerterfassungseinrichtung (2a,2b,2c) und zumindest einem mit der mindestens einen Messwerterfassungseinrichtung (2a,2b,2c) in Verbindung stehenden Schutz- oder Prozessleitgerät (5,6) und einem mit dem zumindest einen Schutz- oder Prozessleitgerät (5,6) in Verbindung stehenden Leitrechner (7),
**dadurch gekennzeichnet, dass**
- die mindestens eine Messwerterfassungseinrichtung (2a,2b,2c), das zumindest eine Schutz- oder Prozessleitgerät (5,6) und der Leitrechner (7) mit einem gemeinsamen Datenübertragungsnetzwerk (3) verbunden sind, das zur Übertragung von digitalen Messdaten von der mindestens einen Messwerterfassungseinrichtung (2a,2b,2c) an das zumindest eine Schutz- oder Prozessleitgerät (5,6) nach einem ersten Kommunikationsprotokoll und zur Übertragung von digitalen Steuerdaten zwischen dem zumindest einen Schutz- oder Prozessleitgerät (5,6) und dem Leitrechner (7) nach einem zweiten, von dem ersten Kommunikationsprotokoll verschiedenen Kommunikationsprotokoll eingerichtet ist.

2. Automatisierungssystem nach Anspruch 1,
**dadurch gekennzeichnet, dass**
- das Datenübertragungsnetzwerk (3) ein Real-Time-Ethernet Netzwerk ist.

3. Automatisierungssystem nach Anspruch 1 oder Anspruch 2,
**dadurch gekennzeichnet, dass**
- mit dem Datenübertragungsnetzwerk (3) auch Aktoreinrichtungen (11) verbunden sind, die ausgangsseitig mit dem automatisierten Prozess (1) in Verbindung stehen.

4. Automatisierungssystem nach einem der vorangehenden Ansprüche,
**dadurch gekennzeichnet, dass**
- das Datenübertragungsnetzwerk (3) in Ringstruktur ausgebildet ist.

5. Automatisierungssystem nach einem der vorangehenden Ansprüche,
**dadurch gekennzeichnet, dass**
- das Datenübertragungsnetzwerk (3) aus zumindest zwei redundant zueinander aufgebauten Teilnetzwerken (3a,3b) besteht.

6. Automatisierungssystem nach einem der vorangehenden Ansprüche,
**dadurch gekennzeichnet, dass**
- die mindestens eine Messwerterfassungseinrichtung (2a,2b,2c) einen Analog/Digital-Umsetzer und eine Netzwerkanschlusseinrichtung zum Anschluss an das Datenübertragungsnetzwerk aufweist.

7. Automatisierungssystem nach einem der Ansprüche 1 bis 5,
**dadurch gekennzeichnet, dass**
- die zumindest eine Messwerterfassungseinrichtung (2a,2b,2c) zur Umsetzung der Messdaten in das erste Kommunikationsprotokoll mit einer Umsetzungseinrichtung (8) verbunden ist, die ausgangsseitig mit dem Datenübertragungsnetzwerk (3) verbunden ist.

8. Automatisierungssystem nach einem der vorangehenden Ansprüche,
**dadurch gekennzeichnet, dass**
- das zumindest eine Schutz- oder Prozessleitgerät (5,6) und/oder die mindestens eine Messwerterfassungseinrichtung (2a,2b,2c) jeweils über eine Netzwerkanschlusseinrichtung mit dem Datenübertragungsnetzwerk (3) verbunden ist, wobei die Netzwerkanschlusseinrichtung genau einen mit dem zumindest einen Schutz- oder Prozessleitgerät (5,6) oder der Messwerterfassungseinrichtung (2a,2b,2c) verbundenen internen Port (10) und genau zwei mit dem Datenübertragungsnetzwerk (3) verbundene externe Ports (9a,9b) aufweist.

## Claims

1. Automation system having at least one measured-value detection device (2a, 2b, 2c) which is connected to an automated process (1), and having at least one protective device or process controller device (5, 6), which is connected to the at least one measured-value detection device (2a, 2b, 2c), and a host computer (7) which is connected to the at least one protective device or process controller device (5, 6),
**characterized in that**
- the at least one measured-value detection device (2a, 2b 2c), the at least one protective device or process controller device (5, 6) and the host computer (7) are connected to a common data transmission network (3) which is designed to transmit digital measured data from the at least one measured-value detection device (2a, 2b, 2c) to the at least one protective device or process controller device (5, 6) using a first communication protocol, and to transmit digital control data between the at least one protective device or process controller device (5, 6) and the host computer (7) using a second communication protocol different from the first communication protocol.

2. Automation system according to Claim 1,
**characterized in that**
- the data transmission network (3) is a Real-Time-Ethernet Network.

3. Automation system according to Claim 1 or Claim 2,
**characterized in that**
- actuator devices (11) are also connected to the data transmission network (3), and are connected on the output side to the automated process (1).

4. Automation system according to one of the preceding claims,
**characterized in that**
- the data transmission network (3) has a ring structure.

5. Automation system according to one of the preceding claims,
**characterized in that**
- the data transmission network (3) comprises at least two mutually redundant network elements (3a, 3b).

6. Automation system according to one of the preceding claims,
**characterized in that**
- the at least one measured-value detection device (2a, 2b, 2c) has an analog/digital converter and a network connecting device for connection to the data transmission network.

7. Automation system according to one of Claims 1 to 5,
**characterized in that**
- the at least one measured-value detection device (2a, 2b, 2c) is connected to a conversion device (8) for converting the measured data to the first communication protocol, which conversion device (8) is connected on the output side to the data transmission network (3).

8. Automation system according to one of the preceding claims,
**characterized in that**
- the at least one protective device or process controller device (5, 6) and/or the at least one measured-value detection device (2a, 2b, 2c) are each connected via a network connecting device to the data transmission network (3) with the network connecting device having one and only one internal port (10), which is connected to the at least one protective device or process controller device (5, 6) or to the measured-value detection device (2a, 2b, 2c) and two, and only two, external ports (9a, 9b) which are connected to the data transmission network (3).

## Revendications

1. Système d'automatisation comprenant au moins un dispositif ( 2a, 2b, 2c ) de détection de valeurs de mesure raccordé à un processus ( 1 ) automatisé et au moins un appareil ( 5, 6 ) de protection ou de conduite de processus en liaison avec le dispositif ( 2a, 2b, 2c ) de détection de valeurs de mesure et un ordinateur ( 7 ) de conduite en liaison avec le au moins un appareil ( 5, 6 ) de protection ou de conduite de processus, **caractérisé en ce que**
- le au moins un dispositif ( 2a, 2b, 2c ) de détection de valeurs de mesure, le au moins un appareil ( 5, 6 ) de protection ou de conduite de processus et l'ordinateur (7 ) de conduite sont reliés à un réseau ( 3 ) commun de transmission de données, qui est conçu pour la transmission de données de mesure numériques du au moins un dispositif ( 2a, 2b, 2c ) de détection de valeurs de mesure au au moins un appareil ( 5, 6 ) de protection ou de conduite de processus suivant un premier protocole de communication et pour la transmission de données de commande numériques entre le au moins un appareil ( 5, 6 ) de protection ou de conduite de processus et l'ordinateur ( 7 ) de conduite suivant un deuxième protocole de communication différent du premier protocole de communication.

2. Système d'automatisation suivant la revendication 1, **caractérisé en ce que**
- le réseau ( 3 ) de transmission de données est un réseau éthernet en temps réel.

3. Système d'automatisation suivant la revendication 1 ou la revendication 2,
**caractérisé en ce que**
- au réseau ( 3 ) de transmission de données sont reliés aussi des dispositifs ( 11 ) actionneurs, qui sont en liaison du côté de la sortie avec le processus ( 1 ) automatisé.

4. Système d'automatisation suivant l'une des revendications précédentes,
**caractérisé en ce que**
- le réseau ( 3 ) de transmission de données est constitué en structure annulaire.

5. Système d'automatisation suivant l'une des revendications précédentes,
**caractérisé en ce que**
- le réseau ( 3 ) de transmission de données est constitué d'au moins deux sous-réseaux ( 3a, 3b ) constitués de manière redondante l'un par rapport à l'autre.

6. Système d'automatisation suivant l'une des revendications précédentes,
**caractérisé en ce que**
- le au moins un dispositif ( 2a, 2b, 2c ) de détection de valeurs de mesure comporte un convertisseur analogique/numérique et un dispositif de connexion de réseau pour la connexion au réseau de transmission de données.

7. Système d'automatisation suivant l'une des revendications 1 à 5, **caractérisé en ce que**
- le au moins un dispositif ( 2a, 2b, 2c ) de détection de valeurs de mesure est, pour la conversion des données de mesure dans le premier protocole de communication, relié à un dispositif ( 8 ) de conversion, qui est relié du côté de la sortie au réseau ( 3 ) de transmission de données.

8. Système d'automatisation suivant l'une des revendications précédentes,
**caractérisé en ce que**
- le au moins un appareil ( 5, 6 ) de protection ou de conduite de processus et/ou le au moins un dispositif ( 2a, 2b, 2c ) de détection de valeurs de mesure est relié respectivement par un dispositif de connexion de réseau au réseau ( 3 ) de transmission de données, le dispositif de connexion de réseau ayant exactement un accès ( 10 ) interne relié au au moins un appareil ( 5, 6 ) de protection ou de conduite de processus ou au dispositif ( 2a, 2b, 2c ) de détection de valeurs de mesure et exactement deux accès ( 9a, 9b ) externes reliés au réseau ( 3 ) de transmission de données.
